# FASCICULE DE BREVET EUROPEEN

(11) **EP 3 222 483 B1**
(45) Date de publication et mention de la délivrance du brevet: **17.06.2020**
(21) Numéro de dépôt: 17162340.8
(22) Date de dépôt: 22.03.2017
(51) Int. Cl.: B61C 9/52, B61F 5/06, B61F 5/30, B61F 5/52, B60L 5/39, B61H 1/00, B61F 3/04

(54) **BOGIE À MOTEUR EXTÉRIEUR ET VÉHICULE FERROVIAIRE ASSOCIÉ**
DREHGESTELL MIT AUSSENMOTOR, UND ENTSPRECHENDES SCHIENENFAHRZEUG
BOGIE WITH OUTER MOTOR AND ASSOCIATED RAIL VEHICLE

(30) Priorité: 25.03.2016 FR 1652640
(43) Date de publication de la demande: 27.09.2017
(73) Titulaire: ALSTOM Transport Technologies, 93400 Saint-Ouen (FR)
(72) Inventeur: RODET, Alain, 71100 CHALON SUR SAÔNE (FR); CARON, Bruno, 71200 SAINT SERNIN DU BOIS (FR)
(74) Mandataire: Lavoix

(56) Documents cités:
- FR-A1- 2 637 861
- FR-A1- 2 991 956
- US-A- 3 835 788

## Description

La présente invention concerne un bogie de véhicule ferroviaire comprenant deux paires de roues, les roues d'une paire étant reliées l'une à l'autre par un dispositif de liaison pour former un essieu, lesdits essieux étant reliés l'un à l'autre par un châssis, chacun des essieux étant articulé au châssis, le châssis comprenant deux traverses, le bogie comprenant au moins un moteur, les deux traverses définissant entre elles un espace interne.

Les documents FR 2 991 956 A1 ou FR 2 637 861 A1 décrivent, par exemple, un tel bogie.

Ce bogie est adapté pour porter une caisse, plus particulièrement dans le cadre d'un tramway à plancher bas.

Le bogie décrit n'est cependant pas compatible avec la présence d'un troisième rail de prise de courant au sol nécessaire pour l'alimentation électrique de certains métropolitains. Ainsi, le bogie n'est pas adapté pour être intégré à certains véhicules ferroviaires pour lesquels une alimentation en courant par le sol est prévue.

De plus, un tel bogie n'est pas prévu pour être placé en interface avec deux caisses.

De plus, dans un bogie conventionnel, comprenant au moins un moteur en partie centrale et une suspension secondaire à l'extérieur de la partie centrale, sur les côtés, l'ajout d'une suspension secondaire identique et l'augmentation de l'encombrement pour des dispositifs de liaison pour permettre de recevoir deux caisses entraînerait une augmentation de l'empattement du bogie. Cela aurait notamment pour conséquence une augmentation de l'agressivité du véhicule ferroviaire sur la voie, une limitation dans les courbes pouvant être suivies par le bogie et une diminution de l'espace disponible dans la caisse, ce qui est un enjeu important plus particulièrement dans le métropolitain.

L'invention a notamment pour but de remédier à ces inconvénients en proposant un bogie de véhicule ferroviaire à empattement réduit et compatible avec la présence d'un troisième rail de prise de courant au sol.

A cet effet, l'invention a notamment pour objet un bogie de véhicule ferroviaire du type précité, dans lequel le moteur se situe à l'extérieur de l'espace interne, le moteur étant situé selon une direction d'élévation au-dessus du plan comprenant sensiblement l'axe central des deux essieux.

L'élévation du moteur au-dessus du plan des essieux offre la possibilité d'ajouter un patin entre le moteur et le sol, le patin étant, par exemple, adapté pour interagir avec un troisième rail de courant.

L'invention concerne un bogie selon la revendication 1.

Le bogie selon l'invention peut comporter en outre l'une ou plusieurs des caractéristiques des revendications 2 à 5, prises seules ou selon toutes les combinaisons techniquement possibles.

L'invention concerne également un véhicule ferroviaire selon la revendication 6.

Le véhicule ferroviaire selon l'invention peut comporter en outre l'une ou plusieurs des caractéristiques des revendications 7 et/ou 8, prises seules ou selon toutes les combinaisons techniquement possibles.

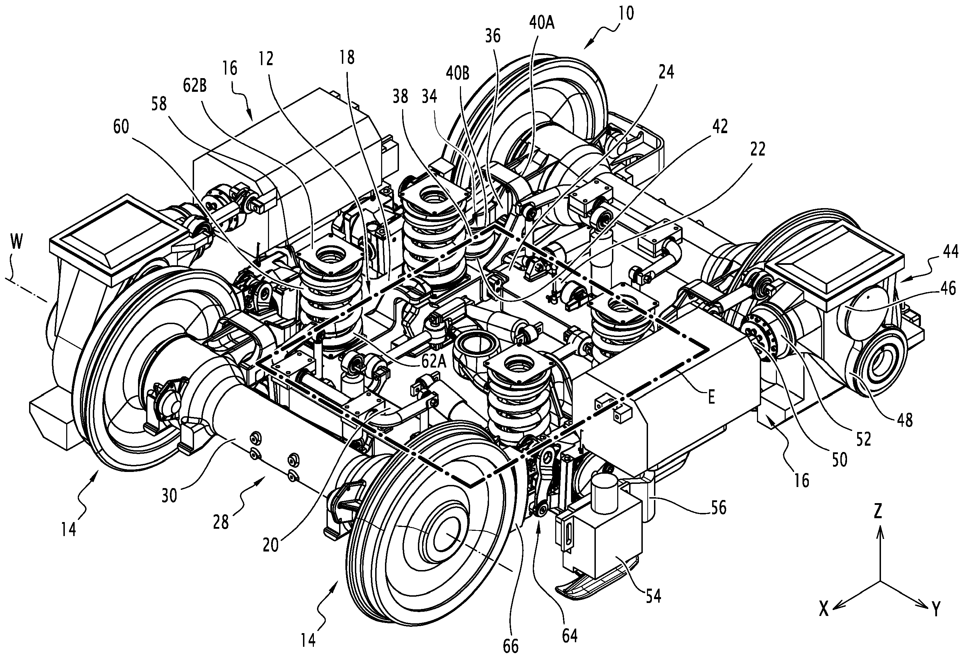

L'invention sera mieux comprise à la lecture de la description qui va suivre, donnée uniquement à tire d'exemple et faite en se référant à la figure 1 annexée qui est une vue en perspective d'un bogie selon un exemple de mode de réalisation de l'invention.

Dans la présente description, les termes « vertical » et « horizontal » sont définis par rapport à un bogie monté dans un véhicule ferroviaire. Ainsi, un plan horizontal est sensiblement parallèle au plan dans lequel s'étendent les essieux et la direction verticale est sensiblement perpendiculaire à tout plan horizontal, les roues étant dans un plan vertical.

Par la suite, nous appellerons de manière générale « direction d'élévation » la direction verticale telle que définie précédemment.

Le terme « longitudinal » est défini par rapport à la direction dans laquelle s'étend un véhicule ferroviaire et correspondant à la direction de circulation du véhicule ferroviaire, et le terme « transversal » est défini selon une direction sensiblement perpendiculaire à la direction longitudinale et à la direction d'élévation.

On a représenté sur la figure 1 un repère, dans lequel la direction longitudinale est désignée par la référence X, la direction transversale est désignée par la référence Y, et la direction d'élévation, perpendiculaire aux directions longitudinale X et transversale Y, est désignée par la référence Z.

Par ailleurs, les termes « avant » et « arrière » sont définis par rapport au sens de déplacement du véhicule ferroviaire dans la direction longitudinale X.

On a représenté sur la figure 1 un bogie 10 de véhicule ferroviaire, par exemple de métropolitain.

Le bogie 10 comprend un châssis 12, deux paires de roues 14, agencées respectivement à l'avant et à l'arrière du bogie 10 et au moins un moteur 16.

Dans l'exemple représenté, le châssis 12 est dit du type intérieur, c'est-à-dire qu'il est disposé dans un espace délimité par les roues 14. Un tel châssis intérieur présente une masse réduite, et un faible coût de fabrication, en plus de réduire l'encombrement du bogie dans la direction transversale.

Le châssis 12 comporte deux longerons latéraux 18 et deux traverses de châssis, notamment une traverse avant 20 et une traverse arrière 22, s'étendant chacune transversalement entre les longerons latéraux 18.

Les deux traverses 20, 22 définissent entre elles un espace interne E.

Le châssis 12 est, par exemple, un châssis articulé en deux demi-châssis.

Chaque traverse 20, 22 est solidaire d'un longeron latéral 18 respectif, et articulé autour d'une liaison pivot 24 avec l'autre longeron, d'axe parallèle à une direction générale dans laquelle s'étend le longeron 18 avec laquelle elle est articulée, c'est-à-dire un axe longitudinal.

Ainsi, le châssis 12 comporte deux parties en forme de L, chaque partie en forme de L étant formée par une traverse et un longeron respectif. Ces deux parties en forme de L forment les deux demi-châssis.

Les deux demi-châssis sont articulés l'un par rapport à l'autre sensiblement autour d'un axe diagonal passant par les liaisons pivot 24.

On notera qu'un châssis articulé similaire à celui du bogie de l'invention est, par exemple, décrit dans EP 0 834 435. Un tel châssis permet de limiter les déchargements de roues induits par des défauts de voies, appelés gauches, et de franchir ces gauches de voies sans encombre.

Les roues de chaque paire 14 sont reliées l'une à l'autre par un dispositif de liaison (non représenté) pour former un essieu 28, comprenant deux roues et le dispositif de liaison reliant les roues.

Les roues 14 sont reliées par leur moyeu, c'est-à-dire en leur centre.

Le dispositif de liaison s'étend transversalement entre les roues 14 et est solidaire de ces roues 14.

Le dispositif de liaison assure notamment la fonction d'arbre de transmission entre les roues. Le dispositif de liaison assure ainsi la transmission de mouvement entre les deux roues 14 de l'essieu 28.

Les essieux 28 s'étendent selon un axe central W transversal entre deux extrémités. Une roue 14 est montée à chaque extrémité de l'essieu 28.

Les essieux 28 sont reliés l'un à l'autre par le châssis 12.

Chacun des essieux 28 est articulé au châssis 12.

Ici chaque essieu 28 est en liaison articulée simultanément aux deux demi-châssis autour d'un axe sensiblement parallèle à l'axe de l'essieu, et sensiblement dans le plan de l'essieu.

Deux boîtes d'essieu associées comprenant au moins un roulement sont montées sur chaque essieu 28. Les boîtes d'essieu sont montées à chaque extrémité de l'essieu 28, par exemple, entre les roues 14.

Les boîtes d'essieu relient l'essieu 28 au châssis 12 par le roulement de sorte à permettre une rotation de l'essieu par rapport aux boîtes d'essieu 28.

Pour chaque essieu 28, les deux boîtes d'essieu sont reliées par une liaison rigide 30.

La liaison rigide 30 ne tourne pas en rotation autour de l'essieu 28.

La liaison rigide 30 est assurée par un fourreau.

Le fourreau relie les roulements des deux boîtes d'essieu associées et entoure le dispositif de liaison de l'essieu 28 correspondant.

Selon un mode de réalisation, chaque boîte d'essieu comprend un unique roulement, assurant la rotation de l'essieu 28 par rapport à la boîte d'essieu.

Chaque roulement présente, par exemple, la forme d'un cône de révolution tronqué. Le cône de révolution s'étend autour de l'axe central W de l'essieu 28. Les roulements des boîtes d'essieu associées sont sensiblement symétriques par rapport à un plan central. Le plan central s'étend verticalement à égale distance des roues 14 de l'essieu 28. Chaque roulement forme un angle α non nul avec l'axe central W de l'essieu 28. Les roulements des boites d'essieu associées forment ainsi des angles α opposés avec l'axe principal de l'essieu. L'angle α est compris entre 10 et 20°.

La liaison rigide 30 entre les boîtes d'essieu transmet les efforts appliqués selon une direction transversale au bogie d'une boîte d'essieu à l'autre.

Les roulements des boîtes d'essieu sont aptes à reprendre l'ensemble des efforts transversaux grâce à la liaison rigide, aussi efficacement que selon une structure habituelle dans laquelle chaque boîte d'essieu comprend deux roulements ayant des angles opposés.

Le châssis 12 est relié aux boîtes d'essieu par l'intermédiaire de suspensions primaires 34 qui vont maintenant être décrites. Plus particulièrement, chaque longeron latéral 18 est relié à deux boîtes d'essieu par l'intermédiaire de deux des suspensions primaires 34.

Les suspensions primaires 34 sont aptes à reprendre des débattements verticaux.

Comme cela est notamment représenté sur la figure 1, les suspensions 34 comportent, pour chaque boîte d'essieu, un bras 36 et un ressort hélicoïdal primaire 38.

Chaque bras 36 s'étend sensiblement longitudinalement entre une première extrémité 40A solidaire de la boîte d'essieu correspondante, et une seconde extrémité 40B libre, de sorte que chaque ressort hélicoïdal primaire 38 est déporté sensiblement à hauteur du dispositif de liaison.

Chaque ressort hélicoïdal primaire 38 s'étend entre la seconde extrémité 40B du bras 36, et un siège 42, porté par le châssis 12, notamment par le longeron latéral 18 correspondant. Avantageusement, chaque ressort hélicoïdal primaire 38 s'étend sensiblement selon la direction d'élévation Z.

Au niveau de chaque suspension primaire 34, le châssis 12 est situé sous la boîte d'essieu correspondante. Ainsi le châssis 12 s'étend généralement sous les essieux 28.

Le moteur 16 est apte à entraîner en rotation au moins un essieu 28.

Le moteur 16 se situe à l'extérieur de l'espace interne E. Plus précisément, le moteur 16 est situé à l'extérieur de l'espace interne E selon la direction transversale Y et entre les deux essieux 28 selon une direction longitudinale X.

Le moteur est situé selon la direction d'élévation Z au-dessus du plan comprenant sensiblement l'axe central W des deux essieux 28.

Le moteur 16 est relié à au moins un des essieux 28 par un réducteur 44 à double étage, permettant de transmettre le mouvement d'un arbre de sortie du moteur à l'essieu.

Plus particulièrement, le moteur 16 est relié au moyeu d'une des roues 14 par le réducteur 44.

Le réducteur 44 comprend au moins un premier engrenage 46 et un deuxième engrenage 48.

Un pignon d'entrée du premier engrenage 46 est relié à l'arbre de sortie 50 du moteur 16, par exemple, par un accouplement 52. Le pignon d'entrée du premier engrenage 46 est situé à la même hauteur selon la direction d'élévation Z que la sortie 50 du moteur 16. Le moteur 16 est apte à entraîner en rotation le premier engrenage 46

Une couronne de sortie du deuxième engrenage 48 est reliée au moyeu. La couronne de sortie du deuxième engrenage 48 est située à la même hauteur selon la direction d'élévation Z que le moyeu de la roue 14.

Le premier engrenage 46 est localisé au-dessus et s'étend au droit du deuxième engrenage 48 selon la direction d'élévation Z.

Le premier engrenage 46 est prévu pour entraîner le deuxième engrenage 48, et ainsi l'essieu 28.

Selon un mode de réalisation, le bogie 10 comprend, en outre, un patin 54.

Le patin 54 est apte à venir frotter sur un rail de courant, le rail de courant étant, par exemple, prévu sur le sol sur lequel la voie sur laquelle circule le véhicule ferroviaire est installé, de sorte à permettre une alimentation en courant du véhicule ferroviaire.

Le patin 54 est situé sous le moteur 16 selon la direction d'élévation Z.

Le patin 54 est relié au moteur 16, par exemple, par un support 56.

Le patin 54 est prévu, via une chaîne de traction du véhicule, pour alimenter le moteur 16 avec le courant circulant dans le rail de courant.

Le bogie 10 comporte par ailleurs un dispositif de suspension secondaire 58, permettant un déplacement relatif selon la direction d'élévation Z du bogie 10 par rapport à au moins une voiture du véhicule ferroviaire portée par le bogie 10.

Dans le mode de réalisation représenté, le dispositif de suspension secondaire 58 est prévu pour interagir avec deux voitures de véhicule ferroviaire.

Le dispositif de suspension secondaire 58 s'étend dans l'espace interne E.

Cela permet notamment une diminution du cisaillement subit par le dispositif de suspension secondaire, les efforts angulaires étant diminués en se rapprochant du centre de rotation du bogie.

Le dispositif de suspension secondaire 58 comporte, pour chacun des longerons latéraux 18, au moins un ressort hélicoïdal secondaire 60, par exemple deux ressorts hélicoïdaux secondaires 60 agencés en parallèle.

Les ressorts secondaires 60 sont placés selon les sommets d'un rectangle.

Les deux ressorts secondaires 60 à l'avant, chacun sur un longeron différent, sont prévus pour porter une première voiture. Les deux ressorts secondaires 60 à l'arrière, chacun sur un longeron différent, sont prévus pour porter une deuxième voiture.

Chaque ressort 60 s'étend entre un premier siège 62A ménagé sur le longeron 18, et un second siège 62B destiné à recevoir le véhicule ferroviaire.

Avantageusement, chaque ressort hélicoïdal secondaire 60 s'étend sensiblement selon la direction d'élévation Z.

Les ressorts secondaires 60 sur un même longeron 18 sont sensiblement alignés avec les deux moyens de suspension primaires 34 reliés à ce longeron 18 selon une direction longitudinale.

Le bogie 10 comprend, en outre, un dispositif de freinage 64.

Le dispositif de freinage 64 comprend un bloc frein 66 monté sur le châssis à proximité de chaque roue.

Chaque bloc frein 66 est prévu pour frotter contre la roue 14 lorsqu'une commande de freinage est reçue et pour être espacé de la roue 14 sinon. Le frottement entraîne un freinage du bogie 10.

Plus particulièrement, le bloc frein 66 entre en contact avec la table de roulement de la roue à hauteur des longerons 18, la table de roulement étant la partie de la roue 14 prévue pour être en contact avec la voie.

On notera que l'invention n'est pas limitée au mode de réalisation précédemment décrit, mais pourrait présenter diverses variantes sans sortir du cadre des revendications.

En particulier, l'invention pourrait être appliquée à un bogie comportant un ou deux moteurs, chaque moteur étant relié à un essieu différent.

Par ailleurs, le châssis articulé du bogie pourrait présenter une autre structure que celle qui a été précédemment décrite.

Enfin, le bogie selon l'invention pourrait équiper tout type de véhicule ferroviaire, par exemple, un tramway, un métro ou un train grandes lignes.

L'élévation du moteur en dehors de l'espace interne permet de réduire l'empattement du bogie, notamment par rapport au cas où le moteur est situé dans l'espace interne à hauteur des traverses 20, tout en étant adapté au cas où le véhicule ferroviaire est alimenté par un troisième rail de courant. Cela permet notamment de diminuer l'angle d'attaque des roues dans les virages, lorsque la roue n'est pas tangente au rail. Ainsi, l'usure du rail est diminuée et des virages plus serrés peuvent être franchis.

L'espace dégagé sous le moteur, ici décrit pour recevoir le patin, pourrait être utilisé pour loger un ou plusieurs autres types d'élément du bogie.

De plus, lorsque l'empattement du bogie est réduit, les essieux sont plus proches du centre de rotation du bogie. Ainsi plus les roues sont proches du centre de rotation, plus le débattement transversal au niveau des roues dû à la rotation du bogie sous les caisses est faible. Il est alors possible de réduire les marges longitudinales et transversales prévues entre les roues et le plancher. Ces marges sont initialement prévues afin d'éviter que le plancher vienne frotter contre les roues en cas de rotation.

La liaison rigide 30 entre les boîtes d'essieu transmet les efforts entre les deux boîtes d'essieu. Les roulements des boîtes d'essieu sont ainsi mutualisés. Il n'est pas nécessaire d'avoir deux roulements par boîte d'essieu. Les deux roulements mutualisés de l'essieu sont aptes à supporter les différents efforts, notamment transversaux.

De plus, la liaison rigide 30 n'étant pas entraînée en rotation, un ou plusieurs équipements sont susceptibles d'y être accrochés sans être à leur tour entraînés en rotation, par exemple un autre patin adapté pour interagir avec un autre rail de courant.

Enfin, l'articulation du châssis dispense la suspension primaire d'avoir la capacité de prendre les gauches de voie, ce qui limite les débattements de cette suspension à de seuls débattements verticaux. En virage les essieux 28 restent parallèles au châssis 12, ce qui limite le roulis de caisse aux seuls débattements de la suspension secondaire. Ainsi, pour des voies souterraines, la distance prévue entre la caisse et un éventuel mur délimitant la voie, de part et d'autre de la caisse, est susceptible d'être diminuée. Les dimensions de la caisse peuvent donc être augmentées, de sorte à obtenir un espace plus important dans la caisse pour les passagers et/ou la marchandise à transporter.

Le bogie selon l'invention permet donc notamment d'optimiser la place au sein d'un véhicule ferroviaire.

## Revendications

1. Bogie (10) de véhicule ferroviaire comprenant deux paires de roues (14), les roues (14) d'une paire étant reliées l'une à l'autre par un dispositif de liaison pour former un essieu (28), lesdits essieux (28) étant reliés l'un à l'autre par un châssis (12), chacun des essieux (28) étant articulé au châssis (12), le châssis (12) comprenant deux traverses (20, 22), le bogie comprenant au moins un moteur (16), les deux traverses (20, 22) définissant entre elles un espace interne (E),
**caractérisé en ce que** le moteur (16) se situe à l'extérieur de l'espace interne (E) selon une direction transversale (Y), le moteur (16) étant situé selon une direction d'élévation (Z) au-dessus du plan comprenant sensiblement l'axe central (W) des deux essieux (28),
**en ce que** le moteur (16) est situé entre les deux essieux (28) selon une direction longitudinale (X),
et **en ce que** le bogie comprend un patin (54), le patin étant apte à venir frotter sur un rail de courant, le patin (54) étant relié au moteur (16).

2. Bogie selon la revendication 1, comprenant un dispositif de suspension secondaire (58), le dispositif de suspension secondaire (58) s'étendant dans l'espace interne (E).

3. Bogie selon la revendication 1 ou 2, **caractérisé en ce que** le moteur (16) est relié à au moins un des essieux (28) par un réducteur (44) à double étage.

4. Bogie selon la revendication 3, **caractérisé en ce que** le moteur (16) est relié à un moyeu d'une des roues (14) par le réducteur (44).

5. Bogie selon la revendication 4, **caractérisé en ce que** le réducteur (44) comprend au moins un premier et un deuxième engrenages (46, 48), le premier engrenage (46) étant relié à un arbre de sortie (50) du moteur (16), le deuxième engrenage (48) étant relié au moyeu, le premier engrenage (46) étant localisé au-dessus du deuxième engrenage (48) selon la direction d'élévation (Z).

6. Véhicule ferroviaire comprenant au moins une voiture et au moins un bogie (10) selon l'une quelconque des revendications précédentes, le bogie (10) portant la voiture.

7. Véhicule ferroviaire selon la revendication 6, **caractérisé en ce que** le véhicule est alimenté en électricité par un rail de courant au sol.

8. Véhicule ferroviaire selon la revendication 6 ou 7, comprenant au moins deux voitures, le bogie (10) portant deux voitures.

## Patentansprüche

1. Drehgestell (10) für ein Schienenfahrzeug, zwei Paare von Rädern (14) umfassend, wobei die Räder (14) eines Paars miteinander über eine Verbindungsvorrichtung einer Radachse (28) verbunden sind, wobei die Radachsen (28) miteinander durch einen Rahmen (12) verbunden sind, jede der Radachsen (28) an dem Rahmen (12) angelenkt ist und der Rahmen (12) zwei Traversen (20, 22) umfasst, wobei das Drehgestell mindestens einen Motor (16) umfasst und die zwei Traversen (20, 22) zwischen sich einen inneren Raum (E) definieren,
**dadurch gekennzeichnet, dass** der Motor (16) sich außerhalb des inneren Raums (E) gemäß einer Querrichtung (Y) befindet, wobei der Motor (16) gemäß einer Höhenrichtung (Z) über der Ebene liegt, die im Wesentlichen die Mittelachse (B) der zwei Radachsen (28) umfasst,
dass der Motor (16) zwischen den zwei Radachsen (28) gemäß einer Längsrichtung (X) liegt,
und dass das Drehgestell eine Kufe (54) umfasst, wobei die Kufe geeignet ist, auf einer Stromschiene zu schleifen und die Kufe (54) mit dem Motor (16) verbunden ist.

2. Drehgestell nach Anspruch 1, eine Sekundäraufhängung (58) umfassend, wobei die Sekundäraufhängung (58) sich in den inneren Raum (E) erstreckt.

3. Drehgestell nach Anspruch 1 oder 2, **dadurch gekennzeichnet, dass** der Motor (16) mit mindestens einer der Radachsen (28) durch ein doppelstufiges Getriebe (44) verbunden ist.

4. Drehgestell nach Anspruch 3, **dadurch gekennzeichnet, dass** der Motor (16) über das Getriebe (44) mit einer Nabe eines der Räder (14) verbunden ist.

5. Drehgestell nach Anspruch 4, **dadurch gekennzeichnet, dass** das Getriebe (44) mindestens ein erstes und ein zweites Zahnrad (46, 48) umfasst, wobei des ersten Zahnrad (46) mit einer Ausgangswelle (50) des Motors (16) verbunden ist, das zweite Zahnrad 48 mit der Nabe verbunden ist, wobei das erste Zahnrad (46) gemäß der Höhenrichtung (Z) über dem zweiten Zahnrad (48) liegt.

6. Schienenfahrzeug, mindestens einen Wagen und mindestens ein Drehgestell (10) nach einem beliebigen der vorhergehenden Ansprüche umfassend, wobei das Drehgestell (10) den Wagen trägt.

7. Schienenfahrzeug nach Anspruch 6, **dadurch gekennzeichnet, dass** das Fahrzeug von einer Stromschiene am Boden elektrisch versorgt wird.

8. Schienenfahrzeug nach Anspruch 6 oder 7, mindestens zwei Wagen umfassend, wobei das Drehgestell (10) die zwei Wagen trägt.

## Claims

1. Bogie (10) for a railway vehicle, comprising two pairs of wheels (14), the wheels (14) of a pair being connected to one another by a connecting device to form an axle (28), said axles (28) being connected to one another by a chassis (12), each of the axles (28) being articulated with the chassis (12), the chassis (12) comprising two cross-members (20, 22), the bogie comprising at least one motor (16), the two cross-members (20, 22) defining between them an internal space (E),
**characterised in that** the motor (16) is situated outside the internal space (E) in a transverse direction (Y), the motor (16) being situated in an elevation direction (Z) above the plane comprising substantially the central axis (W) of the two axles (28),
**in that** the motor (16) is situated between the two axles (28) in a longitudinal direction (X),
and **in that** the bogie comprises a shoegear (54), the shoegear being capable of rubbing against a conductor rail, the shoegear (54) being connected to the motor (16).

2. Bogie according to claim 1, comprising a secondary suspension device (58), the secondary suspension device (58) extending in the internal space (E).

3. Bogie according to claim 1 or 2, **characterised in that** the motor (16) is connected to at least one of the axles (28) by a two-stage reducer (44).

4. Bogie according to claim 3, **characterised in that** the motor (16) is connected to a hub of one of the wheels (14) by the reducer (44).

5. Bogie according to claim 4, **characterised in that** the reducer (44) comprises at least a first and a second gear (46, 48), the first gear (46) being connected to an output shaft (50) of the motor (16), the second gear (48) being connected to the hub, the first gear (46) being located above the second gear (48) in the elevation direction (Z).

6. Railway vehicle comprising at least one carriage and at least one bogie (10) according to any one of the preceding claims, the bogie (10) carrying the carriage.

7. Railway vehicle according to claim 6, **characterised in that** the vehicle is supplied with power by a ground conductor rail.

8. Railway vehicle according to claim 6 or 7, comprising at least two carriages, the bogie (10) carrying two carriages.
